# EUROPÄISCHE PATENTSCHRIFT

(11) **EP 0 271 074 B1**
(45) Veröffentlichungstag und Bekanntmachung des Hinweises auf die Patenterteilung: **01.06.1994**
(21) Anmeldenummer: 87118225.9
(22) Anmeldetag: 09.12.1987
(51) Int. Cl.: G02F 1/133, H01J 31/24

(54) **Projektionsröhre**
Projection tube
Tube de projection

(30) Priorität: 11.12.1986 DE 3642321
(43) Veröffentlichungstag der Anmeldung: 15.06.1988
(73) Patentinhaber: Nokia (Deutschland) GmbH, 75175 Pforzheim (DE)
(72) Erfinder: Pottharst, Jürgen, Dr., D-7000 Stuttgart 80 (DE); Tischer, Kurt-Manfred, D-7317 Wendlingen (DE)

(56) Entgegenhaltungen:
- FR-A- 1 484 584
- FR-A- 2 163 856
- GB-A- 1 371 364
- US-A- 3 862 450
- IBM TECHNICAL DISCLOSURE BULLETIN, Band 16, Nr. 1, Juni 1973, Seiten 353-354, New York, US ; I.F. CHANG : "Electron-beam addressable liquid-crystal display with storage capability".

## Beschreibung

Die Erfindung bezieht sich auf eine Projektionsröhre mit einer Flüssigkristallzelle gemäß dem Oberbegriff des Anspruchs 1.

Aus der DE-A-33 37 350 ist eine derartige Projektionsröhre bekannt, die in einem Projektionssystem zur großflächigen Darstellung von z.B. Fernsehbildern eingesetzt wird. Der FR-A-2163858 ist eine Flüssigkristallzelle zu entnahmen, bei der eine Platte auf ihrer zum Flüssigkristall weisenden Fläche ein aus leitenden Flächen bestehendes Mosaik aufweist.

Der Erfindung liegt die Aufgabe zugrunde, eine Projektionsröhre mit einer hohen Auflösung und Schärfe anzugeben.

Die Lösung dieser Aufgabe erfolgt mit den im Anspruch 1 angegebenen Mitteln. Vorteilhafte Ausgestaltungen der Erfindung sind in den Unteransprüchen 2 bis 5 enthalten.

Die Erfindung wird nun anhand von einem in den Figuren gezeigten Ausführungsbeispiel näher erläutert. Es zeigen:
- Fig. 1: schematisch ein Projectionssystem;
- Fig. 2: einen Schnitt durch die Projektionsröhre des Projektionssystems gemäß Fig. 1 und
- Fig. 3: die Draufsicht auf eine Platte, die eine in der Projektionsröhre vorhandene Flüssigkristallzelle einschließt.

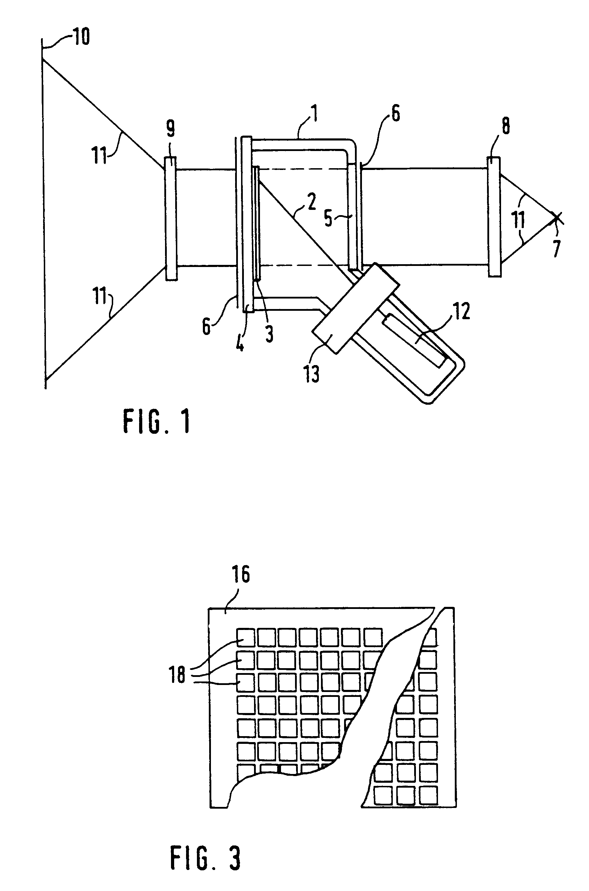

Das in Fig. 1 in einer Seitenansicht dargestellte Projektionssystem enthält eine Projektionsröhre 1 mit einer von einem Elektronenstrahl 2 adressierbaren Flüssigkristallzelle 3. Auf der Frontplatte 4 und dem rückwärtigen Eintrittsfenster 5 ist je eine Polarisationsfolie 6 angebracht. Die Projektionsröhre 1 wird von planparallelem Licht, das aus einer Lichtquelle 7 mit einem Polarisator 8 stammt, beleuchtet. Das von der Projektionsröhre 1 abgegebene Licht gelangt über eine optische Vergrößerungseinrichtung 9 auf einen Schirm 10. Die von der Lichtquelle 7 ausgehenden Lichtstrahlen 11 sind in ihrer Grenzlage gezeichnet. Der Elektronenstrahl 2 tastet beispielsweise die Flüssigkristallzelle 3 zeilenweise ab und steuert sie dabei entsprechend einem am zugehörigen Elektronenstrahlerzeugersystem 12 anliegenden Videosignal. Zur Ablenkung des Elektronenstrahles 2 ist ein Ablenksystem 13 auf der Projektionsröhre 1 vorhanden. Das zum Löschen der Adressierung der Flüssigkristallzelle 3 notwendige Elektronenstrahlsystem ist der besseren Übersicht wegen nicht dargestellt.

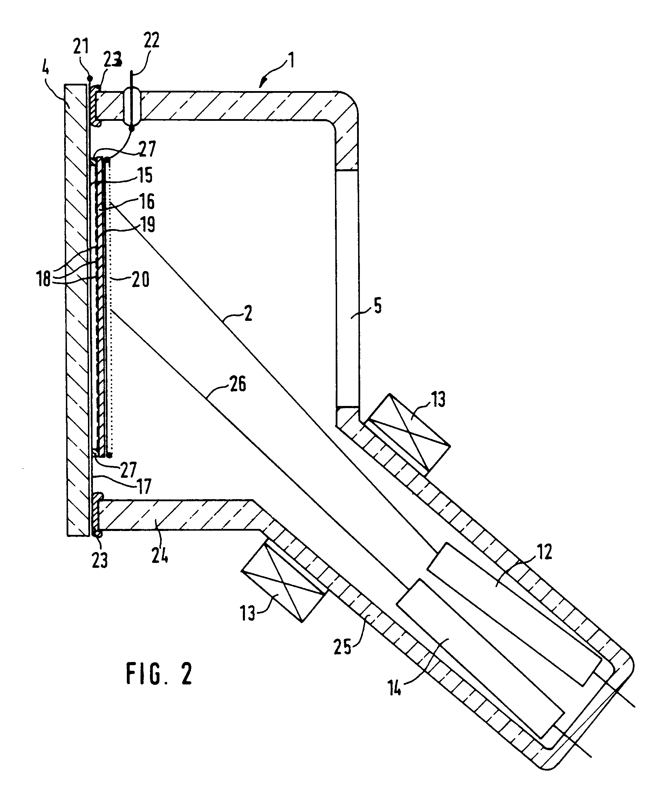

Bei der in Fig. 2 im Schnitt dargestellten Projektionsröhre 1 ist gegenüber der Darstellung in Fig. 1 das Elektronenstrahlerzeugersystem 14, das einen Elektronenstrahl 26 zum Löschen der Adressierung der Flüssigkristallzelle liefert, eingezeichnet.

Der Flüssigkristall 15 der Flüssigkristallzelle ist zwischen zwei Platten und einem Rahmen 27 eingeschlossen. Dabei wird die eine Platte durch die Frontplatte 4 der Projektionsröhre 1 gebildet. Auf der zum Flüssigkristall 15 weisenden Fläche der Frontplatte 4 ist eine ganzflächige, durchsichtige Beschichtung 17 aus Indium-Zinn-Oxid (ITO) aufgebracht. Die Frontplatte 4 ist durch eine übliche Frittverbindung 23 mit dem Kolben 24, der einen schräg angesetzten Hals 25 aufweist, der Projektionsröhre verbunden.

Die zweite den Flüssigkristall 15 anschließende Platte 16 besteht aus einer dünnen planparallelen Glasplatte. Auf der zum Flüssigkristall 15 weisenden Fläche dieser Platte 16 sind punktförmige Beschichtungen 18 aus einem elektrisch leitendem und durchsichtigem Material aufgebracht, wie später im einzelnen dargestellt wird.

Auf der vom Elektronenstrahl 2 beschriebenen Fläche der Platte 16 ist eine durchsichtige Isolationsschicht 19 voranden, die einen hohen Sekundärelektronen-Koeffizienteneffekt aufweist. Die Isolationsschicht 19 kann beispielsweise aus Magnesiumoxid bestehen, das vorteilhafterweise durch Aufdampfen aufgebracht wird. Um eventuelle Rückwirkungen von Sekundärelektronen auszuschließen, kann vor der Isolationsschicht 19 ein Metallgitter 20 hoher Transparenz angeordnet sein. Die Beschichtung auf der Frontplatte 4 und die Isolationsschicht 19 mit dem darüber befindlichen Metallgitter 20 sind je mit einem nach außen geführten Anschlußkontakt 21 bzw. 22 versehen. Die Projektionsröhre 1 wird in üblicher Art betrieben.

In Fig. 3 ist die Draufsicht auf die zum Flüssigkristall zeigende Fläche der Platte 16 dargestellt. Aus dieser Darstellung sind deutlich die punktförmigen Beschichtungen 18 auf der Platte 16 ersichtlich. Die einzelnen Beschichtungen sind in Form von Zeilen und Spalten angeordnet. Die Beschichtungen 18 können beispielsweise die Abmessung 0,100 mm × 0,100 mm aufweisen. Der Abstand zwischen ihnen beträgt etwa 0,01 mm. Das Material der Beschichtungen 18 besteht aus Indium-Zinn-Oxid (ITO).

Durch die Verwendung einer Isolationsschicht 19 aus Magnesiumoxid auf der zum Elektronenstrahl 2 weisenden Fläche wird eine hohe Sekundärelektronenemission erreicht, die eine schnelle und sichere Durchschaltung des Flüssigkristalls 15 in dem betroffenen Bereich bewirkt. Durch die Anordnung der punktförmigen Beschichtungen 18 auf der zum Flüssigkristall 15 weisenden Fläche der Platte 16 wird eine sehr hohe Auflösung des darzustellenden Bildes bei einer gleichzeitig sehr guten Schärfe erreicht. Hierdurch eignet sich diese Projektionsröhre 1 auch für ein Projektionssystem zum Darstellen von Fernsehbildern in einem hochauflösenden Fernsehsystem.

## Patentansprüche

1. Projektionsröhre mit einer durch einen Elektronenstrahl adressierbaren Flüssigkristallzelle mit zwei den Flüssigkristall einschließenden Platten, von denen die erste gleichzeitig die Frontscheibe der Projektionsröhre ist und die zweite Platte vom Elektronenstrahl beschrieben wird, **dadurch gekennzeichnet,**
daß die zweite durchführungsfreie Platte (16) auf ihrer zum Flüssigkristall (15) weisenden Oberfläche punktförmige Beschichtungen (18) aus elektrisch leitendem und durchsichtigem Material und auf ihrer vom Elektronenstrahl (2) beschriebenen Oberfläche eine vollflächig ausgebildete Schicht (19) aus Magnesiumoxid aufweist.

2. Projektionsröhre nach Anspruch 1, dadurch gekennzeichnet, daß die Beschichtungen (18) aus Indium-Zinn-Oxid bestehen.

3. Projektionsröhre nach Anspruch 2, dadurch gekennzeichnet, daß die Beschichtungen (18) in Form von Zeilen und Spalten angeordnet sind.

4. Projektionsröhre nach Anspruch 1, dadurch gekennzeichnet, daß die Isolationsschicht (19) aus aufgedampften Magnesiumoxid besteht.

5. Projektionsröhre nach Anspruch 1, dadurch gekennzeichnet, daß vor der Isolationsschicht (19) ein Metallgitter (20) hoher Transparenz angeordnet ist.

## Claims

1. Projection tube with a liquid crystal cell, addressable by an electron beam, with two plates enclosing the liquid crystal, the first of which is at the same time the front panel of the projection tube while the second plate is written on by the electron beam, characterized in that the second plate (16) with no passthroughs has on its surface facing toward the liquid crystal (15) dot-shaped coatings (18) of electrically conductive and transparent material, and has on its surface written on by the electron beam (2) a layer (19) of magnesium oxide covering the entire surface.

2. Projection tube according to Claim 1, characterized in that the coatings (18) are made of indium-tin oxide.

3. Projection tube according to Claim 2, characterized in that the coatings (18) are arranged in the form of rows and columns.

4. Projection tube according to Claim 1, characterized in that the insulation layer (19) is made of vacuum-deposited magnesium oxide.

5. Projection tube according to Claim 1, characterized in that a highly transparent metal grid (20) is arranged in front of the insulation layer (19).

## Revendications

1. Tube de projection avec une cellule à cristal liquide, adressable à travers un faisceau électronique, avec deux plaques renfermant le cristal liquide, la première desquelles étant simultanément le disque frontal du tube de projection et la deuxième plaque étant décrite par le faisceau électronique, **caractérisé en ce que** la deuxième plaque (16) à passage libre présente sur sa face orientée vers le cristal liquide (15) des revêtements en points (18) en matériau transparent électroconducteur et sur sa face décrite par le faisceau électronique (2) une couche (19) formée sur toute sa surface de magnésie.

2. Tube de projection selon la revendication 1, **caractérisé en ce que** les revêtements (18) consistent en oxyde stannique d'indium.

3. Tube de projection selon la revendication 2, **caractérisé en ce que** les revêtements (18) sont disposés sous forme de lignes et de fentes.

4. Tube de projection selon la revendication 1, **caractérisé en ce que** la couche d'isolation (19) consiste en magnésie métallisée sous vide.

5. Tube de projection selon la revendication 1, **caractérisé en ce que** une grille métallique (20) de haute transparence est disposée devant la couche d'isolation (19).
